# EUROPÄISCHE PATENTSCHRIFT

(11) **EP 0 911 614 B1**
(45) Veröffentlichungstag und Bekanntmachung des Hinweises auf die Patenterteilung: **17.03.2004**
(21) Anmeldenummer: 98119369.1
(22) Anmeldetag: 14.10.1998
(51) Int. Cl.: G01D 11/24, G01P 1/02, H01R 13/58

(54) **Drehwertgeber**
Rotation sensor
Capteur de rotation

(30) Priorität: 22.10.1997 DE 29718791 U
(43) Veröffentlichungstag der Anmeldung: 28.04.1999
(73) Patentinhaber: SIEMENS AKTIENGESELLSCHAFT, 80333 München (DE)
(72) Erfinder: Modest, Otmar Ing., 78078 Niedereschach (DE); Plankenhorn, Horst Dipl.-Ing., 78048 Villingen-Schwenningen (DE)

(56) Entgegenhaltungen:
- EP-A- 0 655 609
- DE-A- 3 706 168
- GB-A- 2 201 306

## Beschreibung

Die Erfindung betrifft einen Drehwertgeber mit einem im wesentlichen stabförmigen, anflanschbaren Gehäuse, in welchem eine der Signalverarbeitung dienende Permanentmagnet/ Hallgenerator-Kombination und eine Leiterplatte mit einer der Signalverarbeitung dienenden Schaltung angeordnet sind und aus welchem ein der Schaltung zugeordnetes Kabel im wesentlichen quer zur Längsachse des Drehwertgebers herausgeführt ist.

Derartige Drehwertgeber werden bekanntlich zum Erfassen von Drehbewegungen von Maschinen und Fahrzeugen eingesetzt und wirken mit dem Meßobjekt verbundenen ferro-magnetischen Taktscheiben oder Zahnrädern zusammen. Dabei ist, wenn der Drehwertgeber beispielsweise dem Getriebe eines Kraftfahrzeuges zugeordnet wird, eine optimale Anpassung sowohl der Funktionselemente als auch der Anschlußtechnik und des Gehäuseaufbaus insbesondere an den extremen Temperaturgang in einem Bereich von -40°C bis 150°C erforderlich. Auf der anderen Seite stellen derartige Drehwertgeber Massenprodukte dar, das heißt, sie müssen für eine Serienfertigung optimiert sein.

Die übliche Gehäusearchitektur, wie sie z.B. in EP 0 655 609 A1 offenbart ist, sieht ein zweiteiliges Gehäuse bestehend aus einer Schutzhülse und einem Steckersockel oder einem Kabelhalter vor, die unter Schaffung einer dichten Verbindung zusammengefügt werden. Das heißt, daß abgesehen von einem stets bestehenden Dichtheitsrisiko durch Verwendung eines O-Ringes und Verbördeln der Gehäuseteile oder durch Kleben mit im Fertigungsfluß zwischengeschaltetem Aushärten ein erheblicher Arbeitsaufwand erforderlich ist, der insbesondere bei einem Gebertyp mit Kabelhalter bzw. einem Geber mit einem unmittelbar quer zu seiner Längsachse herausgeführten Kabel nicht mechanisierbar ist und nicht in einem ununterbrochenen Montagefluß abgearbeitet werden kann.

Die Aufgabe der vorliegenden Erfindung war es somit, einen Drehwertgeber gemäß dem Gattungsbegriff derart auszubilden, daß er den Bedingungen der Serienfertigung gerecht wird und bei sicherer Funktion mit einem Minimum an Kosten herstellbar ist.

Die Lösung der Aufgabe beschreiben die Schutzansprüche.

Die Erfindung bietet insbesondere den Vorteil, daß die Anzahl der Bauteile und somit auch der Montageschritte weitgehend reduziert ist. Außerdem läßt sich die Montage zügig, das heißt ohne Wartezeiten durchführen, wobei aufgrund des einteiligen Gehäuses und der übersichtlichen Anordnung der zu montierenden Bauteile auch die Fehlermöglichkeiten verringert sind. Vorteilhaft ist ferner, daß das Gehäuse, das mittels einer Vergußmasse geschlossen wird, in einer Vorrichtung aufgenommen und bis zum Aushärten der Vergußmasse in der Vorrichtung verbleiben und mit dieser transportiert werden kann, und daß zwischen der anfänglichen Aufnahmeposition, der Montageposition und der Einfüllposition keine Lageänderung des Gehäuses erfolgt.

Einen wesentlichen Vorteil stellt außerdem die auf einfache Weise ausgebildete Fixiermöglichkeit des in das Gehäuse eingeführten Kabels dar. Das heißt, es lassen sich durch das Einklemmen der Leitungen zwischen die Rippen der Kabelmantel bis zum endgültigen Einbetten vorfixieren, die einzelnen Adern voneinander trennen und ausrichten und die Leiter bis zum Verlöten mit der vorgesteckten und in geeigneter Weise im Gehäuse geführten Leiterplatte exakt positionieren.

Im folgenden sei die Erfindung anhand der beigefügten Zeichnungen näher erläutert. Es zeigen:
- Figur 1,: eine Ansicht eines teilweise geschnittenen Gehäuses eines Erfindungsgemäßen Drehwertgebers,
- Figur 2,: eine Draufsicht des Gehäuses des Drehwertgebers gemäß Figur 1,
- Figur 3,: einen Teilschnitt des montierten Drehwertgebers.

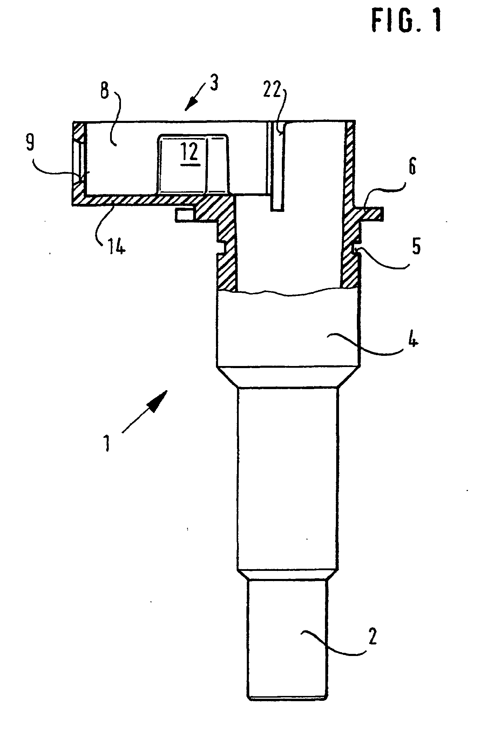

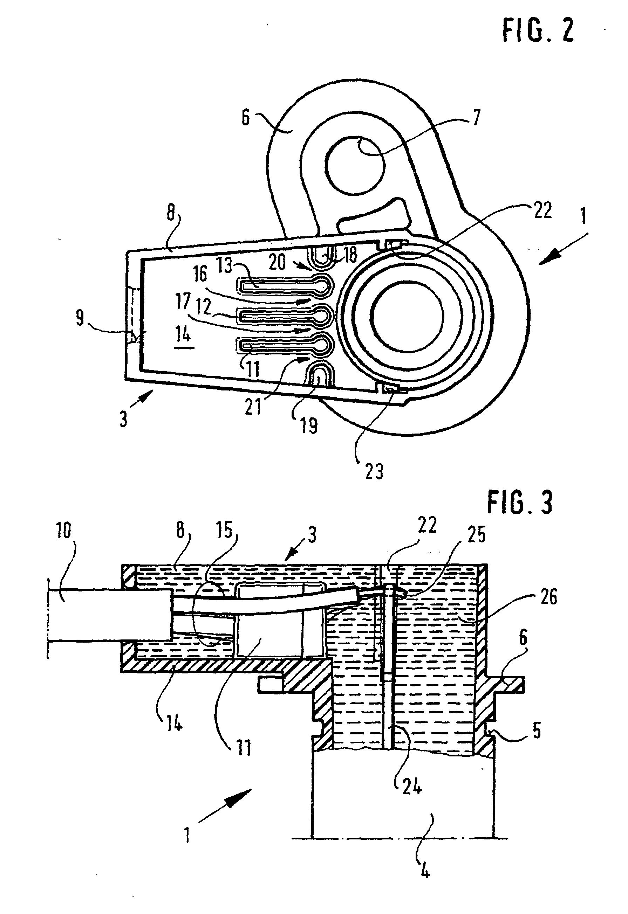

Die Figur 1 zeigt ein mehrfach gestuftes Gehäuse 1, dessen eine Seite, wenn der Meßwertaufnehmer, vorzugsweise eine Permanentmagnet/ Hallganerator-Kombination, in dem Gehäuse 1 eingebaut ist, den Geberkopf 2 bildet und an dessen anderer nach außen offener Seite eine wannenartige Erweiterung 3 angeformt ist, die der Halterung eines Kabels dient, welches zur Energieversorgung und Meßwertübertragung unmittelbar und untrennbar mit dem Drehwertgeber verbunden ist. Ein Gehäuseabschnitt 4, der mit einer Ringnut 5 zur Aufnahme eines 0-Ringes versehen ist, ist für ein abgedichtetes Einpassen des Drehwertgebers in eine entsprechende Öffnung in beispielsweise einem Getriebegehäuse ausgebildet. Mittels eines Flansches 6, der eine Durchgangsbohrung 7 (Figur 2) für eine Schraube aufweist, erfolgt, was bei einem aus Kunststoff hergestellten Geber zwingend erforderlich ist, die Befestigung des Drehwertgebers an dem betreffenden Getriebegehäuse. Ferner ist ersichtlich, daß in der umlaufenden Wand 8 der wannenartigen Erweiterung 3 des Gehäuses 1 eine Öffnung 9 ausgebildet ist, die dem Einführen und Haltern eines Kabels 10 dient. Vorzugsweise ist der Durchmesser der mit einer nicht bezeichneten konischen Senkung versehenen Öffnung 9 kleiner gewählt als der Durchmesser des Kabels 10. Mehrere Rippen 11, 12 und 13, die am Boden 14 der wannenartigen Erweiterung 3 angeformt sind, dienen dem Auffächern und Ausrichten der einzelnen Adern des Aderbündels 15 des Kabels 10. Die Rippen 11, 12, 13 sind vorzugsweise an ihrem von der Öffnung 9 abgewandten Ende verdickt ausgebildet, so daß die Spalte zwischen den Rippen 11, 12, 13 im Bereich der Verdickungen verengt sind, das heißt in bezug auf die einzelnen Adern des Kabels 10 Klemmspalte 16 und 17 bilden. Mit 18 und 19 sind zusätzliche Rippen bezeichnet, mittels denen zusammen mit den Rippen 11 und 13 ebenfalls den Adern zugeordnete Klemmspalte 20 und 21 ausgebildet sind. 22 und 23 stellen Nute dar, welche der seitlichen Halterung einer in das Gehäuse 1 eingeführten Leiterplatte 24 dienen.

Die Figur 3 zeigt den fertig montierten Drehwertgeber, das heißt, das Kabel 10 ist in das Gehäuse 1 eingeführt und die Leiter der einzelnen Adern, einer ist mit 25 bezeichnet, sind mit Leiterbahnen der Leiterplatte 24 verlötet. Mit dem Einbringen einer Vergußmasse 26, die vorzugsweise bis zur Oberkante des Gehäuses 1 aufgefüllt ist, ist das einseitig offene Gehäuse 1 unzugänglich abgeschlossen, zusätzlich sind die Leiterplatte 24 und das Kabel 10 schwingungssicher arretiert.

Der in besonderer Weise vereinfachte Montageablauf des Erfindungsgemäßen Drehwertgebers ist folgender:

Das Gehäuse 1 wird in einer Vorrichtung beziehungsweise in einem Werkstückträger aufgenommen und die mit dem Meßwertaufnehmer und den Bauelementen für die Signalverarbeitung bestückte Leiterplatte 24 eingesetzt. Danach erfolgt das Einführen des vorkonfektionierten Kabels 10. Nach dem Auffächern der Adern des Kabels 10 und dem Ausrichten der Leiter 25 auf die Lötstellen an der Leiterplatte 24 werden die Adern zwischen den Rippen 11, 12, 13, 18 und 19 festgeklemmt. Im nachfolgenden Arbeitsschritt werden die Leiter 25 mit den betreffenden Leiterbahnen auf der Leiterplatte 24 verlötet, was gegebenenfalls in einer geeigneten Vorrichtung en bloc vorgenommen werden kann. Danach wird das Gehäuse mit Vergußmasse 26 gefüllt und zum Aushärten der Vergußmasse 26 einer Wärmebehandlung zugeführt.

## Patentansprüche

1. Drehwertgeber mit einem im wesentlichen stabförmigen, anflanschbaren Gehäuse, in welchem eine der Signalverarbeitung dienende Permanentmagnet/Hallgenerator-Kombination und eine Leiterplatte mit einer der Signalverarbeitung dienenden Schaltung angeordnet sind und aus welchem ein der Schaltung zugeordnetes Kabel im wesentlichen quer zur Längsachse des Drehwertgebers herausgeführt ist,
**dadurch gekennzeichnet,**
**daß** das Gehäuse (1) einteilig, als einseitig offene Hülse ausgebildet ist,
**daß** die offene Seite des Gehäuses (1) wannenartig erweitert ist,
**daß** in einer umlaufenden Wand (8) der wannenartigen Erweiterung (3) eine der Durchführung des Kabels (10) dienende Öffnung (9) vorgesehen ist,
**daß** innerhalb der wannenartigen Erweiterung (3) Rippen (11, 12, 13, 18, 19) angeformt sind derart, daß der kleinste Abstand zwischen den Rippen (11, 12, 13, 18, 19) kleiner ist als die Durchmesser der Adern des Aderbündels (15) des Kabels (10) und
**daß** der Verschluß des Gehäus es (1) durch Einbringen und Aushärten einer Vergußmasse (26) erfolgt.

2. Verfahren zum Montieren eines Drehwertgebers nach Anspruch 1, **dadurch gekennzeichnet,**
**daß** in das in einem Werkstückträger aufgenommene einteilige Gehäuse (1) die vormontierte Leiterplatte (24) eingesetzt wird,
**daß** das freigelegte Aderbündel (15) und ein Abschnitt des Kabels (10) in die Öffnung (9) in der Wand der wannenartigen Erweiterung (3) eingeführt werden,
**daß** die Adern des Aderbündels (15) zwischen den Rippen (11, 12, 13, 18, 19) vereinzelt und eingeklemmt werden,
**daß** die Leiter (25) der Adern mit auf der Leiterplatte (24) befindlichen Leiterbahnen durch Löten kontaktiert werden und
**daß** das Gehäuse (1) durch Auffüllen mit der Vergußmasse (26) und einer nachfolgenden Warmbehandlung stirnseitig geschlossen wird.

## Claims

1. Rotation sensor having an essentially rod-shaped housing which can be attached to flanges and in which a permanent magnet/Hall generator combination which is used for processing signals and a printed circuit board having a circuit which is used for processing signals are arranged, and from which a cable which is assigned to the circuit leads essentially transversely with respect to the longitudinal axis of the rotation sensor, **characterized in that** the housing (1) is constructed in one piece as a sleeve which is open on one side, **in that** the open side of the housing (1) is expanded in the manner of a trough, **in that** an opening (9) which is used to lead through the cable (10) is provided in a circumferential wall (8) of the trough-like expanded portion (3), **in that** ribs (11, 12, 13, 18, 19) are integrally formed within the trough-like expanded portion (3), **in that** the smallest distance between the ribs (11, 12, 13, 18, 19) is smaller than the diameters of the leads of the lead bundle (15) of the cable (10), and **in that** the housing (1) is sealed off by introducing and curing a sealing compound (26).

2. Method for mounting a rotation sensor according to Claim 1, **characterized in that** the premounted printed circuit board (24) is inserted into the single-part housing (1) which is held in a work piece carrier, **in that** the exposed lead bundle (15) and a section of the cable (10) are introduced into the opening (9) of the wall of the trough-like expanded portion (3), **in that** the leads of the lead bundle (15) are separated and clamped in between the ribs (11, 12, 13, 18, 19), **in that** the conductors (25) of the leads are placed in contact with conductor tracks, located on the printed circuit board (24), by soldering, and **in that** the housing (1) is closed at the ends by filling with the sealing compound (26) and a subsequent thermal treatment.

## Revendications

1. Capteur de rotation avec un carter sensiblement en forme de barre et pouvant être bridé, dans lequel sont disposées une combinaison aimant permanent/générateur de Hall servant au traitement du signal et une carte imprimée avec un montage servant au traitement du signal et duquel est sorti un câble attribué au montage et guidé sensiblement transversalement à l'axe longitudinal du capteur de rotation,
**caractérisé en ce que**
le carter (1) est conçu d'une seule pièce, comme un manchon ouvert d'un côté, **en ce que** le côté ouvert du carter (1) est élargi à la façon d'une cuve,
**en ce qu'**une ouverture (9) servant au passage du câble (10) est prévue dans une paroi (8) périphérique de l'élargissement en forme de cuve (3),
**en ce que** des nervures (11, 12, 13, 18, 19) sont formées à l'intérieur de l'élargissement (3) en forme de cuve de telle sorte que l'espace minimum entre les nervures (11, 12, 13, 18, 19) est inférieur aux diamètres des brins du faisceau de brins (15) du câble (10) et
**en ce que** la fermeture du carter (1) s'effectue par l'introduction et le durcissement d'une masse de scellement (26).

2. Procédé pour le montage d'un capteur de rotation selon la revendication 1,
**caractérisé en ce que**
la carte imprimée (24) pré-montée et d'une seule pièce est mise en place dans un carter (1) réceptionné dans un porte-pièce,
**en ce que** le faisceau de brins (15) dénudé et une partie du câble (10) sont introduits dans l'ouverture (9) dans la paroi de l'élargissement en forme de cuve (3),
**en ce que** les brins du faisceau de brins (15) sont isolés et coincés entre les nervures (11, 12, 13, 18, 19),
**en ce que** les conducteurs (25) des brins sont mis en contact par brasage avec des pistes conductives se trouvant sur la carte imprimée (24), et
**en ce que** le carter (1) est formé côté avant par remplissage avec la masse de scellement (26) et un traitement thermique consécutif.
